# EUROPEAN PATENT SPECIFICATION

(11) **EP 3 018 016 B1**
(45) Date of publication and mention of the grant of the patent: **21.03.2018**
(21) Application number: 14820616.2
(22) Date of filing: 21.04.2014
(51) Int. Cl.: B60R 22/20

(54) **SEATBELT ADJUSTER STRUCTURE**
SICHERHEITSGURTEINSTELLSTRUKTUR
STRUCTURE DE DISPOSITIF DE RÉGLAGE DE CEINTURE DE SÉCURITÉ

(30) Priority: 01.07.2013 JP 2013137961
(43) Date of publication of application: 11.05.2016
(73) Proprietor: Honda Motor Co., Ltd., Tokyo 107-8556 (JP)
(72) Inventor: SHIMIZU, Takayuki, Wako-shi Saitama 351-0193 (JP); KANNO, Osamu, Wako-shi Saitama 351-0193 (JP)
(74) Representative: Feller, Frank
(86) International application number: PCT/JP2014/061140
(87) International publication number: WO 2015/001836

(56) References cited:
- JP-A- H0 585 302
- JP-A- H09 207 708
- JP-A- 2003 205 821
- JP-B2- 2 551 585
- JP-B2- 2 551 585

## Description

### Technical Field

The present invention relates to a seatbelt adjuster structure including an adjuster anchor slidably attached to an adjuster base that is mounted on a vehicle body, and a cover for covering the adjuster anchor, the cover being covered by a garnish.

### Background Art

Generally, three-point seatbelts are used for vehicle seats such as a driver's seat (front seat). The three-point seatbelts include a through anchor mounted on a center pillar, and a webbing supported by the through anchor. Some of such three-point seatbelts has a seatbelt adjuster structure capable of adjusting a position of the through anchor according to a passenger's height.

The seatbelt adjuster structure comprises, for example, an adjuster base mounted on the center pillar with an adjuster anchor (including an operation knob) being slidably supported by the adjuster base.

Further, a pillar garnish is attached to the center pillar with an adjuster cover being slidably supported by a guide of the pillar garnish.

The adjuster anchor projects through long holes formed in the adjuster cover and the pillar garnish. The through anchor is attached to the projecting adjuster anchor.

In this state, the adjuster cover covers the adjuster anchor and slides in a vertical direction together with the through anchor (i.e., adjuster anchor), as disclosed in, for example, JP 2551585 B2, on which the preamble of claim 1 is based.

In the seatbelt adjuster structure disclosed in JP 2551585 B2, however, the pillar garnish is attached to the center pillar with the adjuster cover being supported by the pillar garnish.

Therefore, the adjuster anchor has to be positioned with the long hole of the adjuster cover while being concealed by the pillar garnish and the adjuster cover. It takes time and effort to perform an assembly work of the seatbelt adjuster structure.

### Summary of Invention

### Technical Problems

It is therefore an object of the present invention to provide a seatbelt adjuster structure which allows an assembly work thereof to be easily performed without requiring time and effort.

### Solutions to Problems

According to one preferred form of the invention, there is provided a seatbelt adjuster structure comprising: an adjuster base adapted to be mounted on a vehicle body; an adjuster anchor slidably supported by the adjuster base and movable in a vertical direction; and a cover having an engagement means engageable with an upper end and a lower end of the adjuster anchor, the cover being configured to cover the adjuster base while the engagement means is engaged with the upper end and the lower end, wherein the cover is covered by a garnish adapted to be mounted on the vehicle body.

Preferably, the engagement means includes a pair of upper engagement pieces engageable with the upper end of the adjuster anchor, and a lower engagement piece engageable with the lower end of the adjuster anchor, the adjuster base includes an upper stopper for stopping the adjuster anchor at an upper stop position, and a lower stopper for stopping the adjuster anchor at a lower stop position, and the upper engagement pieces are arranged on both sides of the upper stopper.

It is preferable that the cover has a pair of first ribs formed at side edges thereof and extending in the vertical direction, and a pair of second ribs located inward of the first ribs and having a projection dimension larger than a projection dimension of the first ribs.

Preferably, the cover has a third rib configured to come into contact with the upper end and both side edges of an upper section of the adjuster anchor.

### Advantageous Effects of Invention

In the invention, the cover has the engagement means which is engageable with the upper end and the lower end of the adjuster anchor. With this configuration, the cover can be attached to the adjuster anchor via the engagement means before the cover is covered by the garnish.

Therefore, the adjuster anchor and the cover can be arranged at a position where the attachment work is easily performed, and thus the cover can be easily attached to the adjuster anchor via the engagement means.

Further, the cover is a small member compared to the garnish. The engagement means can therefore be easily visually observed when the engagement means is engaged with the adjuster anchor.

As a result, the engagement means can be observed in a natural posture, and the engagement means can be easily engaged with the adjuster anchor.

Additionally, the garnish can be attached to the vehicle body after the adjuster base is attached to the vehicle body with the adjuster cover being attached to the adjuster anchor. As a result, an assembly work of the seatbelt adjuster structure can be easily performed without requiring time and effort.

In the invention, the engagement means includes the pair of upper engagement pieces, and the upper engagement pieces are arranged on the both sides of the upper stopper in the state where the upper engagement pieces are engaged with the upper end of the adjuster anchor. With this configuration, it is possible to avoid an abutment of the upper engagement pieces on the upper stopper of the adjuster base when the adjuster anchor is moved along the adjuster base in the vertical direction, so that an amount of displacement of the adjuster anchor in the vertical direction can be secured.

In the invention, since the cover has the pair of first ribs formed at the side edges thereof, the overall contact area of the cover with the garnish is secured to be large. With this configuration, contact pressure of the cover against the garnish can be reduced, and thus the cover can be slid smoothly.

Further, with the first ribs being in contact with the garnish, the cover can be prevented from moving in a direction orthogonal to its sliding direction. As a result, rattle of the cover in the orthogonal direction with respect to the garnish can be suppressed.

Additionally, the cover has the pair of second ribs formed inward of the first ribs with the projection dimension larger than that of the first ribs. With this configuration, the rigidity of the cover is increased by the second ribs, the cover can be slid more smoothly and satisfactorily.

In the invention, the cover has the third rib which is configured to come into contact with the upper end and both side edges of the adjuster anchor.

By forming the third rib to be in contact with the upper end of the adjuster anchor, the cover can be prevented from moving downward by the third rib. As a result, rattle of the cover in a downward direction with respect to the adjuster anchor can be suppressed.

Further, by forming the third rib to be in contact with the both side edges of the adjuster anchor, the cover can be prevented from moving in the direction orthogonal to its sliding direction by the third rib. As a result, rattle of the cover in the orthogonal direction with respect to the adjuster anchor can be suppressed.

### Brief Description of Drawings

Fig. 1 is a perspective view of a vehicle employing a seatbelt adjuster structure according to the present invention;
Fig. 2 is a perspective view of the seatbelt adjuster structure shown in Fig. 1;
Fig. 3 is a perspective view of the seatbelt adjuster structure shown in Fig. 2 as viewed from inside of a pillar garnish, with an adjuster base removed to facilitate understanding;
Fig. 4 is an exploded perspective view of the seatbelt adjuster structure according to the present invention;
Fig. 5 is a cross-sectional view taken along line 5 - 5 of Fig. 1;
Fig. 6 is an exploded perspective view of the seatbelt adjuster structure according to the present invention with an adjuster cover removed;
Fig. 7 is a perspective view showing a relationship between upper engagement pieces and an upper stopper of the seatbelt adjuster structure according to the present invention;
Fig. 8 is a cross-sectional view taken along line 8 - 8 of Fig. 1;
Fig. 9 is an enlarged view of section 9 of Fig. 6;
Fig. 10 is an enlarged view of section 10 of Fig. 6;
Fig. 11 is a view illustrative of the manner in which the adjuster cover is attached to an adjuster anchor of the seatbelt adjuster structure according to the present invention; and
Fig. 12 is a view illustrative of the manner in which the seatbelt adjuster structure according to the present invention is assembled with a center pillar.

### Description of Embodiment

A certain preferred embodiment of the present invention will be described in detail below with reference to the accompanying drawings. In the following description, the terms "front (Fr)", "rear (Rr)", "left (L)" and "right (R)" are used to refer to directions as viewed from a human operator or driver in a vehicle.

### Embodiment

The following is a description of a seatbelt adjuster structure 25 according to the embodiment.

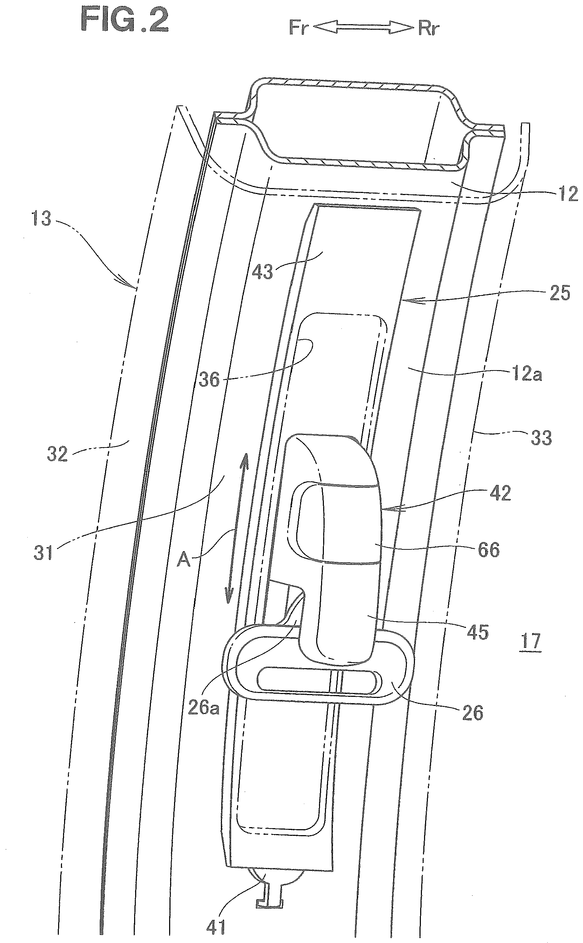

Note that a webbing 22 of a seating device 20 is removed in Figs. 2 to 12 to facilitate understanding of the overall configuration.

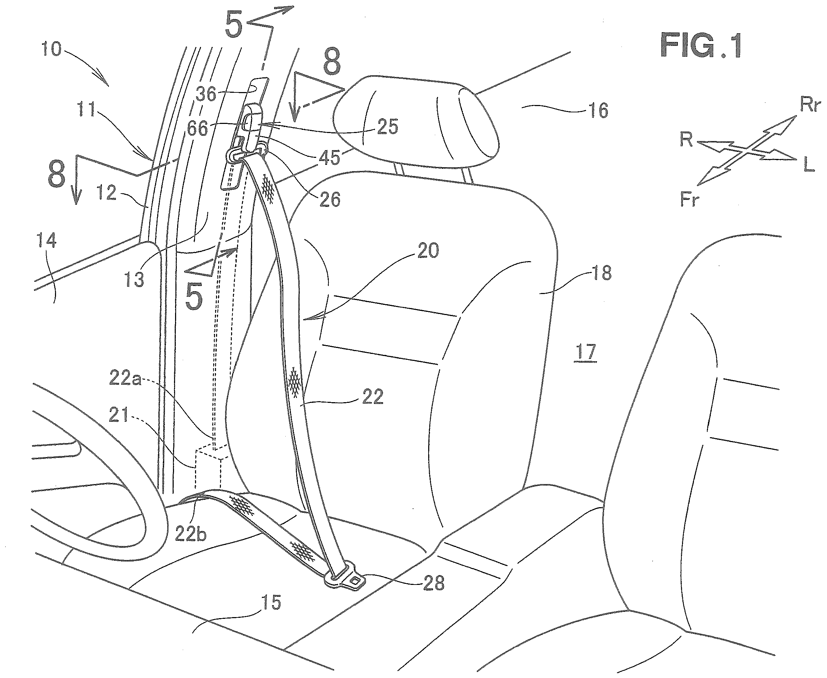

As shown in Fig. 1, a vehicle 10 includes a center pillar 12 constituting a skeleton member of a vehicle body 11, a pillar garnish 13 mounted on the center pillar 12, a front side door 14 provided forward of the pillar garnish 13, an instrument panel 15 provided on a front end side of the front side door 14, and a rear side door 16 provided rearward of the pillar garnish 13.

A passenger compartment 17 is formed by the pillar garnish 13, the front side door 14, the instrument panel 15, the rear side door 16, etc.

The vehicle 10 further includes a driver's seat (front seat) 18 disposed in the passenger compartment 17, and a seating device 20 for restraining a passenger seated on the driver's seat 18.

The seating device 20 includes a winding device 21 provided at a lower part of the center pillar 12, a webbing 22 having a first end 22a connected to the winding device 21 and a second end 22b connected to a floor, the seatbelt adjuster structure 25 having a through anchor 26 for supporting the webbing 22 at a position near a shoulder of the passenger, a tongue 28 attached to the webbing 22 drawn toward the passenger compartment 17 through the through anchor 26, and a lower anchor (not shown) for locking the tongue 28 in a detachable manner.

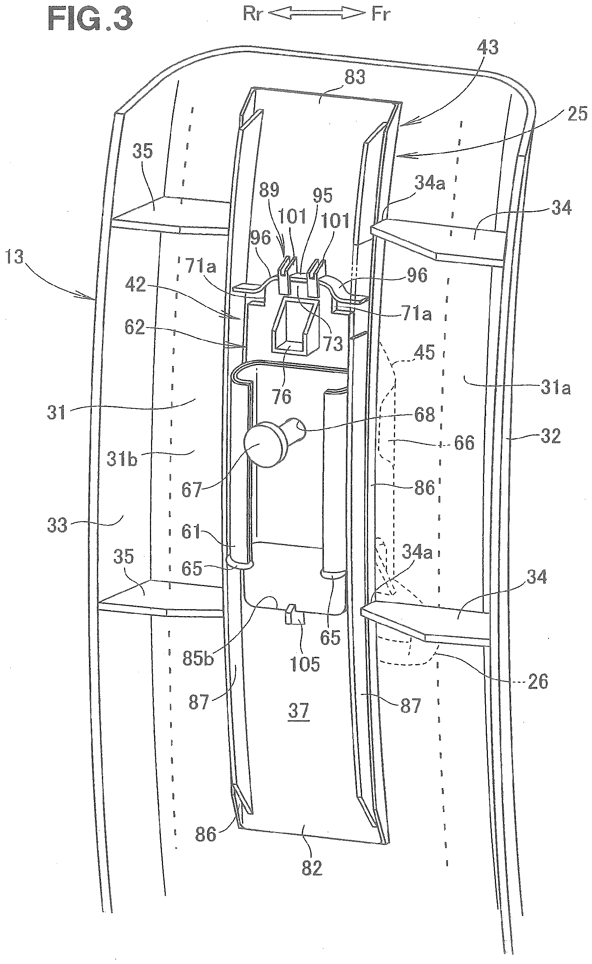

As shown in Figs. 2 and 3, the pillar garnish 13 is a decorative member that covers the center pillar 12 from an interior side of the passenger compartment 17. The pillar garnish 13 has a garnish wall 31 arranged along a pillar wall 12a of the center pillar 12, a front side wall 32 extending outward in a vehicle width direction from a front side end of the garnish wall 31, and a rear side wall 33 extending outward in the vehicle width direction from a rear side end of the garnish wall 31.

The pillar garnish 13 has a substantially U-shaped cross section formed by the garnish wall 31, the front side wall 32, and the rear side wall 33.

The pillar garnish 13 further has a plurality of front pillar ribs 34 formed on a front section 31a of the garnish wall 31 and the front side wall 32, a plurality of rear pillar ribs 35 formed on a rear section 31b of the garnish wall 31 and the rear side wall 33, and a pillar opening 36 formed in the garnish wall 31 at a central section thereof in a longitudinal direction of the vehicle body.

The front pillar ribs 34 are formed on an inner side of the pillar garnish 13 at predetermined intervals in a vertical direction. Similarly to the front pillar ribs 34, the rear pillar ribs 35 are formed on the inner side of the pillar garnish 13 at predetermined intervals in the vertical direction.

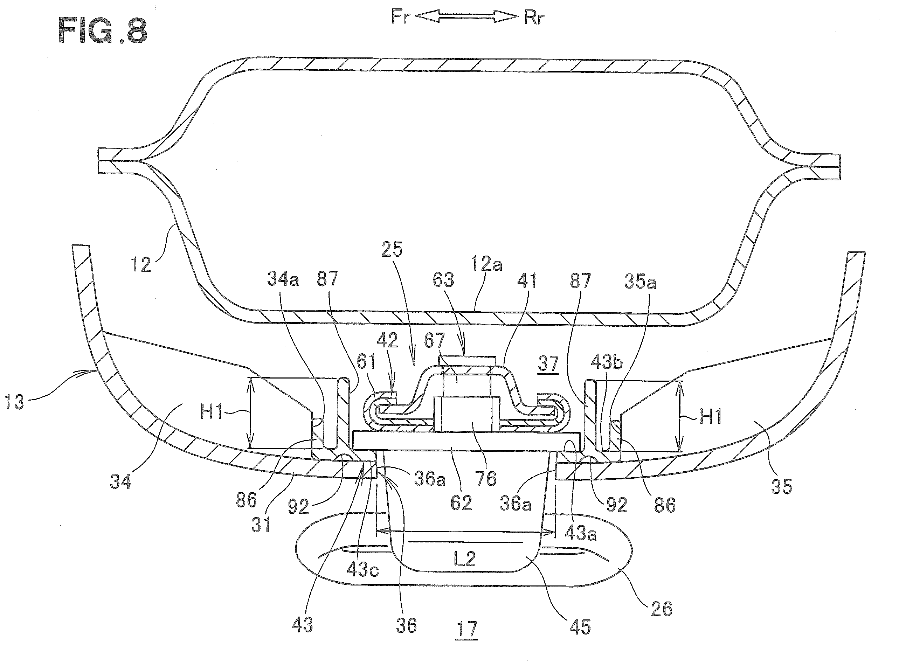

Thus, the pillar garnish 13 has a housing space 37 (see also Fig. 8) formed between the front pillar ribs 34 and the rear pillar ribs 35, at a central section thereof in the longitudinal direction of the vehicle body, to extend in the vertical direction. The seatbelt adjuster structure 25 is arranged in the housing space 37.

The pillar opening 36 is formed in the garnish wall 31 at the central section thereof as noted above. The seatbelt adjuster structure 25 includes an adjuster anchor 42 (more specifically, an operation knob 66) and an anchor cover 45 that are arranged in the pillar opening 36.

The pillar opening 36 is formed to extend in the vertical direction for allowing the seatbelt adjuster structure 25 (more specifically, the adjuster anchor 42) to move in the vertical direction (as indicated by arrow A).

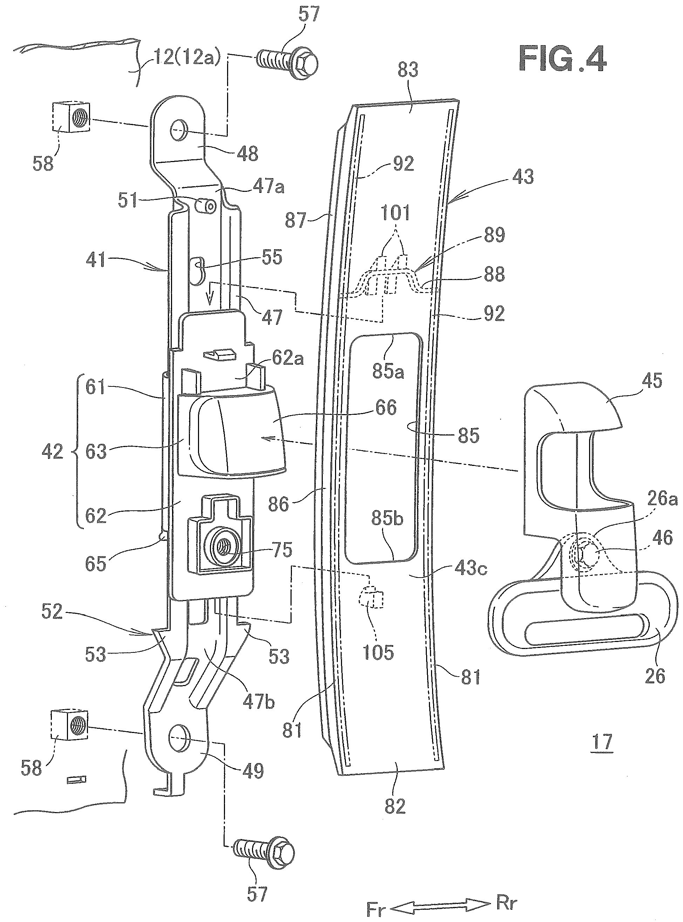

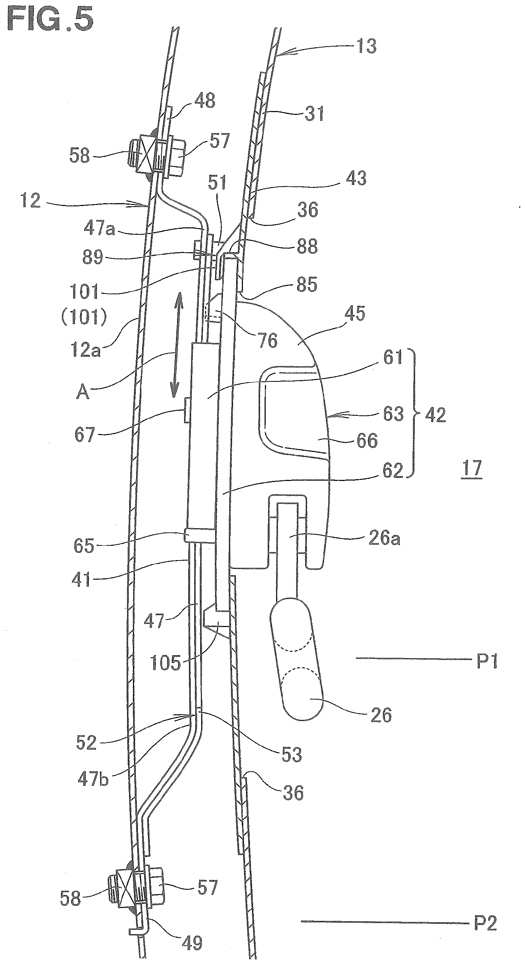

As shown in Figs. 4 and 5, the seatbelt adjuster structure 25 includes an adjuster base 41 adapted to be mounted on the center pillar 12, the adjuster anchor 42 supported by the adjuster base 41, an adjuster cover 43 configured to engage with the adjuster anchor 42, the through anchor 26 attached to the adjuster anchor 42, and the anchor cover 45 for covering an engagement portion 26a of the through anchor 26.

The engagement portion 26a of the through anchor 26 is fixed to the adjuster anchor 42 by a bolt 46 threadedly engaged with a screw hole 75 formed in the adjuster anchor 42.

The adjuster base 41 includes a slide guide 47 for supporting the adjuster anchor 42 slidably in the vertical direction (as indicated by arrow A), an upper leg portion 48 formed at an upper end 47a of the slide guide 47, a lower leg portion 49 formed at a lower end 47b of the slide guide 47, an upper stopper 51 formed at the upper end 47a of the slide guide 47, and a lower stopper 52 formed at the lower end 47b of the slide guide 47.

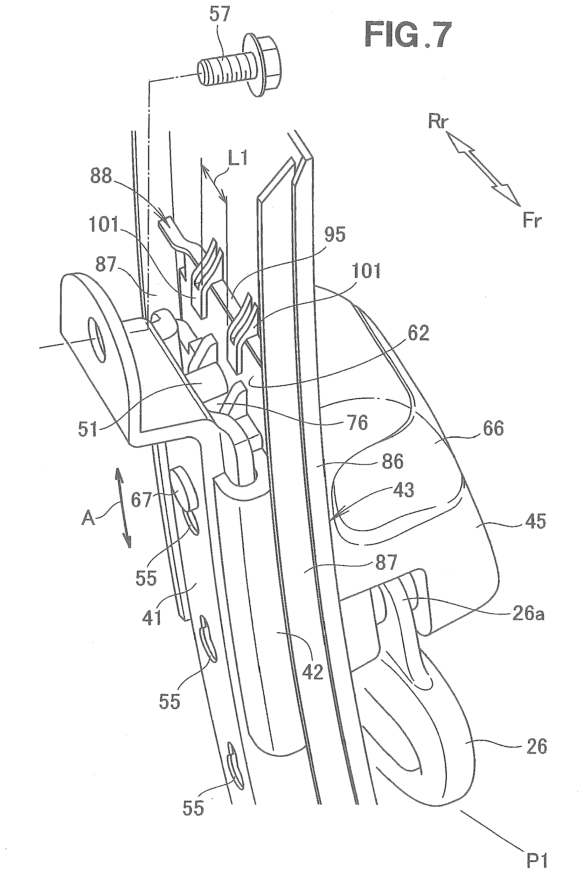

The slide guide 47 has a plurality of locking holes 55 (see also Fig. 7) formed therein at predetermined intervals in the vertical direction.

The upper leg portion 48 and the lower leg portion 49 are attached to the center pillar 12 respectively via upper and lower bolts 57 and nuts 58, whereby the adjuster base 41 is fixed to the pillar wall 12a of the center pillar 12.

As the upper stopper 51, a pin projecting toward the passenger compartment 17 from the upper end 47a of the slide guide 47 is formed. When an upper abutment portion 76 (see also Fig. 3) of the adjuster anchor 42 is brought into abutment with the upper stopper 51, the through anchor 26 is thereby stopped at an upper stop position P1.

As the lower stopper 52, a pair of protruding pieces 53 that protrudes outward from opposite side edges of the lower end 47b of the slide guide 47 is formed. When a lower abutment portion 65 of the adjuster anchor 42 is brought into abutment with the lower stopper 52, the adjuster anchor 42 is thereby stopped at a lower stop position P2.

The adjuster anchor 42 includes a slider 61 supported slidably in the vertical direction by the slide guide 47, an anchor 62 joined to the slider 61, and a locking means 63 formed on the anchor 62.

The slider 61 has the lower abutment portion 65 formed at a lower end thereof. When the lower abutment portion 65 is brought into abutment with the lower stopper 52, the adjuster anchor 42 is thereby stopped at the lower stop position P2.

The anchor 62 is joined to the slider 61 from the interior side of the passenger compartment 17. The operation knob 66 of the locking means 63 is attached substantially at the center of an obverse surface 62a of the anchor 62, and a locking pin 67 is connected to the operation knob 66. In a state where the operation knob 66 is released, the locking pin 67 projects toward the slide guide 47 through a through hole 68 (Fig. 3) formed in the slider 61.

The projecting locking pin 67 is inserted into one of the locking holes 55 (see also Fig. 7) of the slide guide 47, and the adjuster anchor 42 is thereby held at a predetermined position on the adjuster base 41.

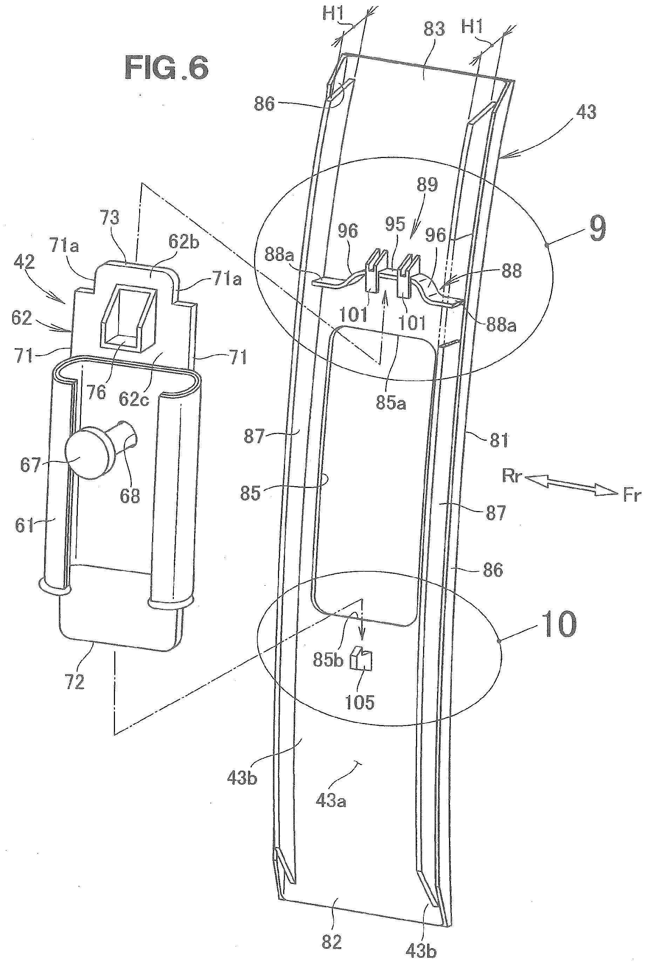

As shown in Fig. 6, the anchor 62 has opposite side edges 71 in the longitudinal direction of the vehicle body, a lower end 72 extending between lower ends of the side edges 71, and an upper end 73 extending between upper ends of the side edges 71.

The side edges 71 have a pair of upper step portions 71a formed at upper parts thereof. The upper step portions 71a constitute opposite side edges of an upper section 62b of the anchor 62, and the upper end 73 extends between upper ends of the upper step portions 71a. In other words, the upper section 62b of the anchor 62 has the upper end 73 and the upper step portions 71a.

The anchor 62 has a substantially rectangular shape in a plan view formed by the side edges 71, the lower end 72, and the upper end 73.

The anchor 62 has the screw hole 75 (Fig. 4) formed at a lower part of the obverse surface 62a, and the upper abutment portion 76 formed at an upper part of on the reverse surface 62c.

As shown in Fig. 7, when the upper abutment portion 76 (see also Fig. 3) of the anchor 62 is brought into abutment with the upper stopper 51 of the adjuster base 41, the adjuster anchor 42 is thereby stopped at the upper stop position P1.

As shown in Figs. 4 and 6, the adjuster cover 43 has opposite cover side edges 81 in the longitudinal direction of the vehicle body, a cover lower end 82 extending between lower ends of the cover side edges 81, and a cover upper end 83 extending between upper ends of the cover side edges 81.

The adjuster cover 43 has a substantially rectangular shape in a plan view formed by the cover side edges 81, the cover lower end 82, and the cover upper end 83.

Further, the adjuster cover 43 has an opening 85 formed in a substantially central section thereof, a pair of first ribs 86 formed at the cover side edges 81, a pair of second ribs 87 located inward of the first ribs 86, a third rib 88 extending between the second ribs 87, and engagement means 89 formed in vicinities of an upper edge 85a and a lower edge 85b.

The opening 85 is formed at a position corresponding to the pillar opening 36 (Fig. 2). The opening 85 is formed so that the locking means 63 (more specifically, the operation knob 66) of the adjuster anchor 42 can be inserted therethrough toward the passenger compartment 17 and the screw hole 75 of the adjuster anchor 42 can be exposed to the interior side of the passenger compartment 17.

With the screw hole 75 being exposed to the interior side of the passenger compartment 17 from the opening 85, the bolt 46 can be screwed to the screw hole 75. The engagement portion 26a of the through anchor 26 is thus fixed to the adjuster anchor 42 via the bolt 46.

The first ribs 86 are formed to project from the cover side edges 81 on a reverse surface 43a side of the adjuster cover 43 and extend in the vertical direction along the cover side edges 81.

As shown in Fig. 8, the first ribs 86 are each formed to be in contact with the pillar garnish 13. More specifically, the first rib 86 on the front side of the vehicle body is formed to be in contact with guide pieces 34a of the front pillar ribs 34. Also, the first rib 86 on the rear side of the vehicle body is formed to be in contact with guide pieces 35a of the rear pillar ribs 35.

As shown in Fig. 6, the second ribs 87 are formed on the reverse surface 43a of the adjuster cover 43 at inner adjacent parts 43b of the first ribs 86. The second ribs 87 extend in the vertical direction along the first ribs 86, and project by a projection dimension or height H1 (see also Fig. 8) larger than a projection dimension or height of the first ribs 86.

With the second ribs 87 having such a large projection dimension H1, the adjuster cover 43 has increased rigidity.

The third rib 88 is formed on the reverse surface 43a of the adjuster cover 43 to extend between the second ribs 87. The third rib 88 extends horizontally in the longitudinal direction of the vehicle body with its opposite ends joined to the second ribs 87. The third rib 88 projects toward the adjuster anchor 42.

By providing the third rib 88 joined to the second ribs 87 and extending horizontally (i.e., in a direction orthogonal to the second ribs 87), the second ribs 87 are reinforced by the third rib 88. As a result, the adjuster cover 43 has further increased rigidity.

As shown in Figs. 3 and 8, with the first ribs 86 formed at the cover side edges 81 of the adjuster cover 43, the overall contact area of the adjuster cover 43 with the front pillar ribs 34 (guide pieces 34a) and the rear pillar ribs 35 (guide pieces 35a) is secured to be large.

With this configuration, contact pressure of the adjuster cover 43 against the front pillar ribs 34 and the rear pillar ribs 35 can be reduced, and thus the adjuster cover 43 can be slid smoothly.

Further, by increasing the rigidity of the adjuster cover 43 by the second ribs 87, the adjuster cover 43 can be slid more smoothly and satisfactorily.

Additionally, since the first ribs 86 are configured to be in contact with the front pillar ribs 34 (guide pieces 34a) and the rear pillar ribs 35 (guide pieces 35a), the adjuster cover 43 can be prevented from moving in a direction orthogonal to its sliding direction by the front pillar ribs 34 and the rear pillar ribs 35.

As a result, rattle of the adjuster cover 43 in the orthogonal direction or horizontal direction with respect to the pillar garnish 13 can be suppressed.

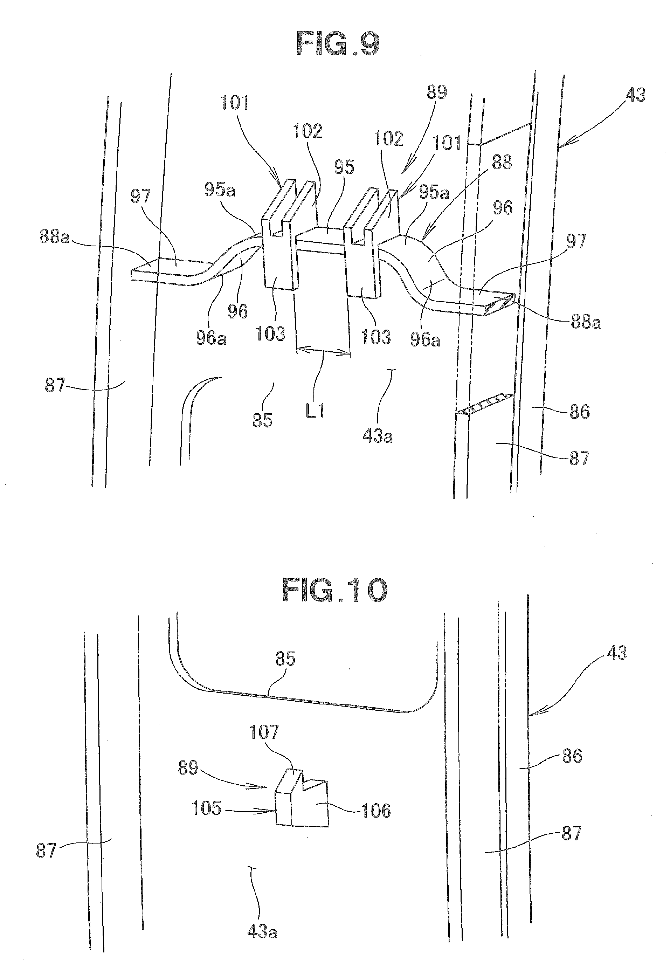

As shown in Figs. 6 and 9, the third rib 88 includes a central rib 95 located at a central part thereof and formed to be in contact with the upper end 73 of the anchor 62, a pair of curved ribs 96 extending curvedly downward from opposite ends 95a of the central rib 95, and extension ribs 97 extending from lower ends 96a of the curved ribs 96 to the second ribs 87.

By forming the central rib 95 to be in contact with the upper end 73 of the anchor 62 (see also Fig. 3), the adjuster cover 43 can be prevented from moving downward by the third rib 88. As a result, rattle of the adjuster cover 43 in a downward direction with respect to the anchor 62 can be suppressed.

The curved ribs 96 are configured to be in contact with the upper step portions 71a of the upper section 62b of the anchor 62 (see also Fig. 3) in the state where the central rib 95 is in contact with the upper end 73 of the anchor 62 (upper section 62b).

More specifically, in the state where the central rib 95 is in contact with the upper end 73, one of the curved ribs 96 is in contact with one of the upper step portions 71a, and the other one of the curved ribs 96 is in contact with the other one of the upper step portions 71a.

With this configuration, the adjuster cover 43 can be prevented from moving in the direction (horizontal direction) orthogonal to its sliding direction (vertical direction) by the curved ribs 96.

As a result, rattle of the adjuster cover 43 in the orthogonal direction (horizontal direction) with respect to the anchor 62 can be suppressed.

The engagement means 89 are located on the reverse surface 43a of the adjuster cover 43, between the second ribs 87, in a region where the central rib 95 of the third rib 88 is formed and a region below the opening 85. The engagement means 89 includes a pair of upper engagement pieces 101 engageable with the upper end 73 of the anchor 62, and a lower engagement piece 105 engageable with the lower end 72 of the anchor 62.

The upper engagement pieces 101 are engaged with the upper end 73 of the anchor 62, and the lower engagement piece 105 is engaged with the lower end 72 of the anchor 62, whereby the adjuster cover 43 is engaged with the anchor 62. By thus engaging the adjuster cover 43 with the anchor 62, the adjuster base 41 is covered by the adjuster cover 43 (see Fig. 4).

The upper engagement pieces 101 are formed on the central rib 95 of the third rib 88 with a predetermined distance L1 therebetween in the longitudinal direction of the vehicle body. The upper engagement pieces 101 each have an upper engagement leg 102 projecting from the reverse surface 43a of the adjuster cover 43 in the vehicle width direction toward the anchor 62 along the central rib 95, and an upper engagement claw 103 projecting from a distal end of the upper engagement leg 102 downwardly toward the anchor 62.

The central rib 95 is brought into contact with an upper edge of the upper end 73, and the upper engagement claws 103 are brought into contact with a reverse surface of the upper end 73, whereby the upper engagement pieces 101 are engaged with the upper end 73 of the anchor 62.

As shown in Fig. 7, the upper engagement pieces 101 are formed with the predetermined distance L1 therebetween in the longitudinal direction of the vehicle body. In the state where the upper engagement pieces 101 are engaged with the upper end 73 of the anchor 62, the upper engagement pieces 101 are arranged on both sides of the upper stopper 51 (in the longitudinal direction of the vehicle body).

With this configuration, it is possible to avoid an abutment of the upper engagement pieces 101 on the upper stopper 51 of the adjuster base 41 when the adjuster anchor 42 is moved along the adjuster base 41 in the vertical direction (as indicated by arrow A).

By thus avoiding the abutment of the upper engagement pieces 101 on the upper stopper 51, an amount of displacement of the adjuster anchor 42 in the vertical direction can be secured.

As shown in Fig. 6 and 10, the lower engagement piece 105 is located below the opening 85, and has a lower engagement leg 106 projecting from the reverse surface 43a of the adjuster cover 43 toward the anchor 62, and a lower engagement claw 107 projecting from a distal end of the lower engagement leg 106 upwardly toward the anchor 62.

The lower engagement leg 106 is brought into contact with (a lower edge of) the lower end 72, and the lower engagement claw 107 is brought into contact with (a reverse surface of) the lower end 72, whereby the lower engagement piece 105 is engaged with the lower end 72 of the anchor 62.

With the central rib 95 being in contact with the upper end 73 of the anchor 62, the upper engagement pieces 101 being engaged with the upper end 73 of the anchor 62, and the lower engagement piece 105 being engaged with the lower end 72 of the anchor 62, the adjuster cover 43 can be prevented from moving in the vertical direction. As a result, rattle of the adjuster cover 43 in the vertical direction with respect to the anchor 62 can be suppressed.

As shown in Figs. 4 and 8, the second ribs 87 are formed on the reverse surface 43a of the adjuster cover 43 (see also Fig. 6) with the projection dimension H1 (see also Fig. 8) larger than that of the first ribs 86. When the adjuster cover 43 is injection-molded, sinks (recesses) 92 might be formed on an obverse surface 43c of the adjuster cover 43.

Thus, a distance L2 between opening side edges 36a of the pillar opening 36 is set so that the sinks 92 are covered by the garnish wall 31 of the pillar garnish 13. By covering the sinks 92 with the garnish wall 31, appearance of the vehicle 10 can be secured.

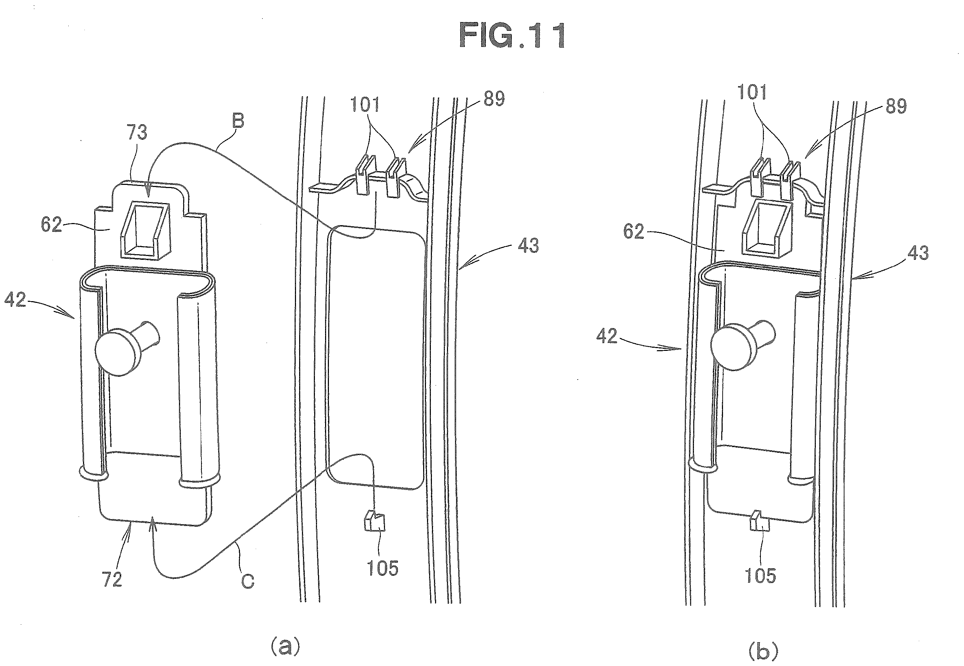

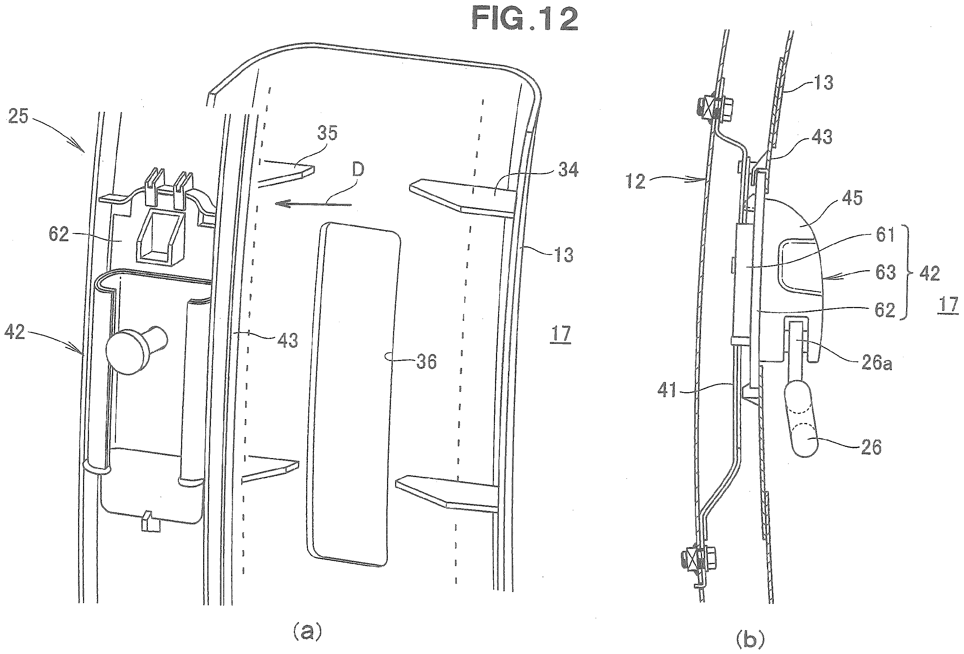

Next will be described how the seatbelt adjuster structure 25 is assembled with the center pillar 12 with reference to Figs. 11 and 12. Note that the adjuster base 41 is removed in Figs. 11 and 12 to facilitate understanding of the assembly work.

As shown in Fig. 11(a), the upper engagement pieces 101 of the adjuster cover 43 are engaged with the upper end 73 of the anchor 62 as indicated by arrow B. After the upper engagement pieces 101 are engaged with the upper end 73 of the anchor 62, the lower engagement piece 105 of the adjuster cover 43 is engaged with the lower end 72 of the anchor 62 as indicated by arrow C.

When the lower engagement piece 105 of the adjuster cover 43 abuts on the lower end 72 of the anchor 62, the lower engagement piece 105 is elastically deformed. By being elastically deformed, the lower engagement piece 105 can be smoothly engaged with the lower end 72 of the anchor 62.

As shown in Fig. 11(b), the upper engagement pieces 101 are engaged with the upper end 73 of the anchor 62, and the lower engagement piece 105 is engaged with the lower end 72 of the anchor 62, whereby the adjuster cover 43 is attached to the anchor 62 (i.e., adjuster anchor 42).

In this manner, the adjuster cover 43 can be attached to the adjuster anchor 42 before the adjuster base 41 is mounted on the center pillar 12 (Fig. 2). Thus, the adjuster anchor 42 and the adjuster cover 43 can be arranged at a position where the attachment work is easily performed. As a result, the adjuster cover 43 can be easily engaged with the anchor 62 via the engagement means 89.

Further, the adjuster cover 43 is a small member compared to the pillar garnish 13 (Fig. 12(a)). The upper engagement pieces 101 and the lower engagement piece 105 (i.e., engagement means 89) can therefore be easily visually observed when the upper engagement pieces 101 and the lower engagement piece 105 are engaged with the anchor 62.

As a result, the engagement means 89 can be observed in a natural posture, and the engagement means 89 can be easily engaged with the anchor 62

As shown in Fig. 12(a), the adjuster base 41 is attached to the center pillar 12 (Fig. 12(b)) with the adjuster cover 43 being attached to the adjuster anchor 42. In the state where the adjuster base 41 is attached to the center pillar 12, the pillar garnish 13 is attached to the center pillar 12 from the interior side of the passenger compartment 17 as indicated by arrow D.

By thus attaching the pillar garnish 13 after the attachment of the adjuster cover 43 to the adjuster anchor 42, the assembly work of the seatbelt adjuster structure 25 with the center pillar 12 can be easily performed without requiring time and effort.

As shown in Fig. 12(b), by attaching the pillar garnish 13 to the center pillar 12, the adjuster cover 43 is covered by the pillar garnish 13 from the interior side of the passenger compartment 17.

In the state where the pillar garnish 13 is attached to the center pillar 12, the engagement portion 26a of the through anchor 26 is fixed to the adjuster anchor 42. The engagement portion 26a of the through anchor 26 is covered by the anchor cover 45 after the fixation of the engagement portion 26a.

It should be noted that the seatbelt adjuster structure according to the present invention is not limited to the above-described embodiment, and various minor changes and modifications of the present invention are possible in light of the above teaching.

For example, the embodiment has been explained in the case where the seatbelt adjuster structure 25 is mounted on the center pillar 12, however, it is not so limited, and the seatbelt adjuster structure 25 may be mounted on a rear pillar or any other part of the vehicle body.

Further, the shapes and configurations of the vehicle, the vehicle body, the center pillar, the pillar garnish, the seatbelt adjuster structure, the adjuster base, the adjuster anchor, the adjuster cover, the upper stopper, the lower stopper, the anchor, the first ribs, the second ribs, the third rib, the engagement means, the upper engagement pieces, the lower engagement piece, etc. are not limited to those illustratively shown and described herein, and they may be modified as necessary.

### Industrial Applicability

The present invention is well suited for use in automobiles equipped with a seatbelt adjuster structure including a cover for covering an adjuster anchor, and a decorative garnish for covering the cover.

### Reference Characters

10 ... vehicle, 11 ... vehicle body, 12 ... center pillar, 13 ... pillar garnish (garnish), 25 ... seatbelt adjuster structure, 41 ... adjuster base, 42 ... adjuster anchor, 43 ... adjuster cover (cover), 51 ... upper stopper, 52 ... lower stopper, 62 ... anchor, 62b ... upper section of the anchor, 71 ... side edges, 71a ... upper step portions of the anchor (side edges of the upper section of the anchor), 72 ... lower end of the anchor, 73 ... upper end of the anchor, 81 ... cover side edges of the adjuster cover (side edges of the cover), 86 ... a pair of first ribs, 87 ... a pair of second ribs, 88 ... third rib, 89 ... engagement means, 101 ... a pair of upper engagement pieces, 105 ... lower engagement piece, H1 ... projection dimension, P1 ... upper stop position, P2 ... lower stop position

## Claims

1. A seatbelt adjuster structure (25) comprising:
an adjuster base (41) adapted to be mounted on a vehicle body (11); and
an adjuster anchor (42, 62) slidably supported by the adjuster base (41) and movable in a vertical direction; and
a cover (43) being configured to cover the adjuster base (41), **characterized in that**
the cover (43) has an engagement means (89) engageable with an upper end (73) and a lower end (72) of the adjuster anchor (42, 62), the cover (43) being configured to cover the adjuster base (41) while the engagement means (89) is engaged with the upper end (73) and the lower end (72) of the engagement means (89),
wherein the adjuster anchor (42, 62) includes an upper section (62b) having the upper end (73) and a pair of upper step portions (71a),
wherein the engagement means (89) includes a central rib (95) formed to be in contact with the upper end (73); and a pair of curved ribs (96, 96) extending curvedly downward from opposite ends of the central rib (95) and formed to be in contact with the upper step portions (71a), and
wherein the cover (43) is covered by a garnish (13) adapted to be mounted on the vehicle body (11).

2. The seatbelt adjuster structure of claim 1, wherein the engagement means (89) includes a pair of upper engagement pieces (101) engageable with the upper end (73) of the adjuster anchor (42, 62), and a lower engagement piece (105) engageable with the lower end (72) of the adjuster anchor (42, 62), wherein the adjuster base (41) includes an upper stopper (51) for stopping the adjuster anchor (42, 62) at an upper stop position, and a lower stopper (52) for stopping the adjuster anchor (42, 62) at a lower stop position, and wherein the upper engagement pieces (101) are arranged on both sides of the upper stopper (51).

3. The seatbelt adjuster structure of claim 1 or 2, wherein the cover (43) has a pair of first ribs (86) formed at side edges (81) thereof and extending in the vertical direction, and a pair of second ribs (87) located inward of the first ribs (86) and having a projection dimension larger than a projection dimension of the first ribs (86).

4. The seatbelt adjuster structure of any one of claims 1 to 3, wherein the cover (43) has a third rib (88) configured to come into contact with the upper end (73) and both side edges of an upper section (62b) of the adjuster anchor (42, 62).

## Patentansprüche

1. Sicherheitsgurteinstellstruktur (25), welche aufweist:
eine Einstellbasis (41), die zum Anbringen an einer Fahrzeugkarosserie (11) ausgelegt ist; und
einen Einstellanker (42, 62), der an der von der Einstellbasis (41) verschiebbar getragen und in vertikaler Richtung bewegbar ist; und
eine Abdeckung (43), die konfiguriert ist, um die Einstellbasis (41) abzudecken,
**dadurch gekennzeichnet, dass**
die Abdeckung (43) ein Eingriffsmittel (89) aufweist, das mit einem oberen Ende (73) und einem unteren Ende (72) des Einstellankers (42, 62) in Eingriff bringbar ist, wobei die Abdeckung (43) konfiguriert ist, um die Einstellbasis (41) abzudecken, während das Eingriffsmittel (89) mit dem oberen Ende (73) und dem unteren Ende (72) des Eingriffsmittels (89) in Eingriff steht,
wobei der Einstellanker (42, 62) einen oberen Abschnitt (62b) enthält, der das obere Ende (73) sowie ein Paar von oberen Stufenabschnitten (71a) aufweist,
wobei das Eingriffsmittel (89) eine Mittelrippe (95) enthält, die zum Kontakt mit dem oberen Ende (73) ausgebildet ist; sowie ein Paar von gekrümmten Rippen (96, 96), die sich von entgegengesetzten Enden der Mittelrippe (95) konkav nach unten erstrecken und zum Kontakt mit den oberen Stufenabschnitten (71a) ausgebildet sind, und
wobei die Abdeckung (43) mit einer Verkleidung (13) abgedeckt ist, die zum Anbringen an einer Fahrzeugkarosserie (11) ausgelegt ist.

2. Die Sicherheitsgurteinstellstruktur von Anspruch 1, wobei das Eingriffsmittel (89) ein Paar von oberen Eingriffsstücken (101) enthält, die mit dem oberen Ende (73) des Einstellankers (42, 62) in Eingriff bringbar sind, sowie ein unteres Eingriffsstück (105), das mit dem unteren Ende (72) des Einstellankers (42, 62) in Eingriff bringbar ist, wobei die Einstellbasis (41) einen oberen Stopper (51) enthält, um den Einstellanker (42, 62) an einer oberen Stoppposition zu stoppen, sowie einen unteren Stopper (52), um den Einstellanker (42, 62) an einer unteren Stoppposition zu stoppen, und wobei die oberen Eingriffsstücke (101) an beiden Seiten des oberen Stoppers (51) angeordnet sind.

3. Die Sicherheitsgurteinstellstruktur von Anspruch 1 oder 2, wobei die Abdeckung (43) ein Paar von ersten Rippen (86) aufweist, die an seinen Seitenrändern (81) ausgebildet sind und sich in der vertikalen Richtung erstrecken, sowie ein Paar von zweiten Rippen (87), die einwärts der ersten Rippen (86) angeordnet sind und eine Vorsprungsabmessung haben, die größer ist als eine Vorsprungsabmessung der ersten Rippen (86).

4. Die Sicherheitsgurteinstellstruktur von einem der Ansprüche 1 bis 3, wobei die Abdeckung (43) eine dritte Rippe (88) aufweist, die konfiguriert ist, um mit dem oberen Ende (73) und beiden Seitenrändern eines oberen Abschnitts (62b) des Einstellankers (42, 62) in Kontakt zu kommen.

## Revendications

1. Structure de dispositif de réglage de ceinture de sécurité (25) comprenant :
une base de dispositif de réglage (41) adaptée pour être montée sur une carrosserie de véhicule (11) ; et
un ancrage de dispositif de réglage (42, 62) supporté en coulissement par la base de dispositif de réglage (41) et mobile dans une direction verticale ; et
un couvercle (43) étant configuré pour couvrir la base de dispositif de réglage (41),
**caractérisée en ce que**
le couvercle (43) a un moyen d'enclenchement (89) pouvant s'enclencher avec une extrémité supérieure (73) et une extrémité inférieure (72) de l'ancrage de dispositif réglage (42, 62), le couvercle (43) étant configuré pour couvrir la base de dispositif de réglage (41) tandis que le moyen d'enclenchement (89) est enclenché avec l'extrémité supérieure (73) et l'extrémité inférieure (72) du moyen d'enclenchement (89),
dans laquelle l'ancrage de dispositif de réglage (42, 62) comporte une section supérieure (62b) ayant l'extrémité supérieure (73) et une paire de portions de décrochement supérieures (71a),
dans laquelle le moyen d'enclenchement (89) comporte une nervure centrale (95) formée pour être en contact avec l'extrémité supérieure (73) ; et une paire de nervures incurvées (96, 96) s'étendant de façon incurvée vers le bas depuis des extrémités opposées de la nervure centrale (95) et formée pour être en contact avec les portions de décrochement supérieures (71a), et
dans laquelle le couvercle (43) est couvert d'une garniture (13) adaptée pour être montée sur la carrosserie de véhicule (11).

2. Structure de dispositif de réglage de ceinture de sécurité selon la revendication 1, dans laquelle le moyen d'enclenchement (89) comporte une paire de pièces d'enclenchement supérieures (101) pouvant s'enclencher avec l'extrémité supérieure (73) de l'ancrage de dispositif de réglage (42, 62), et une pièce d'enclenchement inférieure (105) pouvant s'enclencher avec l'extrémité inférieure (72) de l'ancrage de dispositif de réglage (42, 62), dans laquelle la base de dispositif de réglage (41) comporte un dispositif d'arrêt supérieur (51) pour arrêter l'ancrage de dispositif de réglage (42, 62) à une position d'arrêt supérieure, et un dispositif d'arrêt inférieur (52) pour arrêter l'ancrage de dispositif de réglage (42, 62) à une position d'arrêt inférieure, et dans laquelle les pièces d'enclenchement supérieures (101) sont agencées sur les deux côtés du dispositif d'arrêt supérieur (51).

3. Structure de dispositif de réglage de ceinture de sécurité selon la revendication 1 ou 2, dans laquelle le couvercle (43) a une paire de premières nervures (86) formée au niveau de bords de côté (81) de celui-ci et s'étendant dans la direction verticale, et une paire de deuxièmes nervures (87) située vers l'intérieur des premières nervures (86) et ayant une dimension de saillie plus grande qu'une dimension de saillie des premières nervures (86).

4. Structure de dispositif de réglage de ceinture de sécurité selon l'une quelconque des revendications 1 à 3, dans laquelle le couvercle (43) a une troisième nervure (88) configurée pour venir en contact avec l'extrémité supérieure (73) et les deux bords de côté d'une section supérieure (62b) de l'ancrage de dispositif de réglage (42, 62).
